# EUROPEAN PATENT SPECIFICATION

(11) **EP 2 282 108 B1**
(45) Date of publication and mention of the grant of the patent: **23.10.2013**
(21) Application number: 10425233.3
(22) Date of filing: 09.07.2010
(51) Int. Cl.: F21S 9/03, F21V 23/04, F21Y 101/02

(54) **Energy saving road lighting device with telephone helpline functions**
Energiesparende Straßenbeleuchtungsvorrichtung mit Telefonhilfsleitungsfunktionen
Dispositif d'éclairage public à économie d'énergie doté de fonctions d'assistance téléphonique

(30) Priority: 20.07.2009 IT VI20090182
(43) Date of publication of application: 09.02.2011
(73) Proprietor: Beghelli S.p.A., 40050 Monteveglio, Bologna (IT)
(72) Inventor: Beghelli, Gian Pietro, 40050 Monteveglio, Bologna (IT)
(74) Representative: Iannone, Carlo Luigi

(56) References cited:
- DE-A1-102007 013 129
- GB-A- 2 344 382
- US-A- 4 982 176
- US-A1- 2007 159 836
- US-A1- 2009 040 750

## Description

The present invention refers, in general, to an energy saving road lighting device with telephone helpline functions.

Such a device having the technical features of the preamble of the appended claim 1 is known, for example, from US2009/040750

More particularly, the invention concerns a new road lighting device, with gas discharge and/or LED lamps, in which new power saving modes deriving from the use of sensors are integrated; in addition, the lighting device is able to support communication networks intended to the telephone helpline, as well as to allow management of photovoltaic modules properly installed on respective support poles.

The public road lighting plants consist of a set of poles, on which respective lighting projectors are mounted.

This structural configuration is optimally suited for the integration of one or more solar photovoltaic modules, which can be properly mounted on the poles themselves, in order to achieve a significant energy saving, not only at private field but also at public building level, as well as to implement further auxiliary functions of public utility.

The purpose of the present invention is therefore to create an energy saving road lighting device with telephone helpline functions which performs the functions of night public lighting, using, for switching on public lighting at night, the electricity produced during the day and stored or supplied into the electric supply system, by an appropriate photovoltaic generator, which is attached to the pole or street lamp.

Another purpose of the present invention is to provide an energy saving road lighting device with telephone helpline functions which allows to obtain a high energy saving and a consequent saving in term of energy costs. Further purpose of the invention is to devise an energy saving road lighting device with telephone helpline functions which can be applied to any public pole or street lamp currently in use, presents a relevant ease of installation and maintenance and, at the same time, allows to implement additional functions of public utility.

These and other purposes, in accordance with the present invention, are achieved by providing an energy saving road lighting device with telephone helpline functions, according to claim 1 attached; further specific and detailed technical features are contained in the subsequent dependent claims.

In advantageous way, according to the invention, it is provided to mount one or more modules or solar photovoltaic panels on each pole currently used for the public road lighting.

In particular, the road lighting device according to the invention consists of:
- a set of road projectors, mounted on respective poles for public lighting (lamps), which use LED lighting sources or high pressure gas discharge lamps or bulb, for public roads lighting, each equipped with a photovoltaic generator, consisting of an 150-180 W photovoltaic module and an inverter integrated into the power supply of the lamp;
- a radio transceiver of the "spread spectrum radio" type, integrated into each single projector;
- a controller, integrated into the power supply of each single projector, able to balance the energy produced by the photovoltaic generator with the energy absorbed by the lighting lamp;
- a set of motion sensors, each inserted into each public pole or street lamp, able to instantly detect the movement of people or things on the roadway lightened by the road projectors;
- a set of radio remote control able to send help requests.

Additional features and advantages of an energy saving road lighting device with telephone helpline functions, according to the present invention, will be more evident from the following description, referring to a preferred and illustrative, but not limited to, embodiment of the invention and from the appended drawings in which:

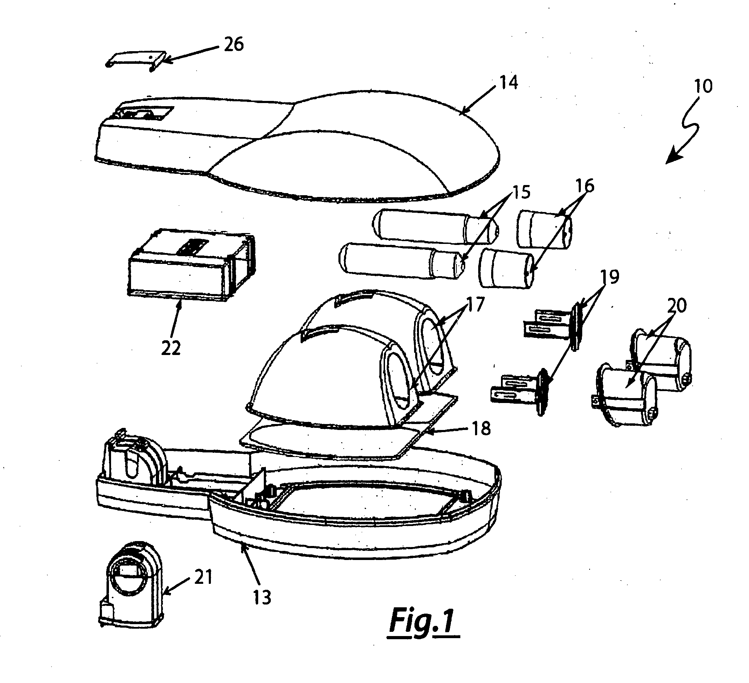

- figure 1 is a partial exploded view of a first embodiment of a road projector used in the energy saving road lighting device with telephone helpline functions, according to the present invention;

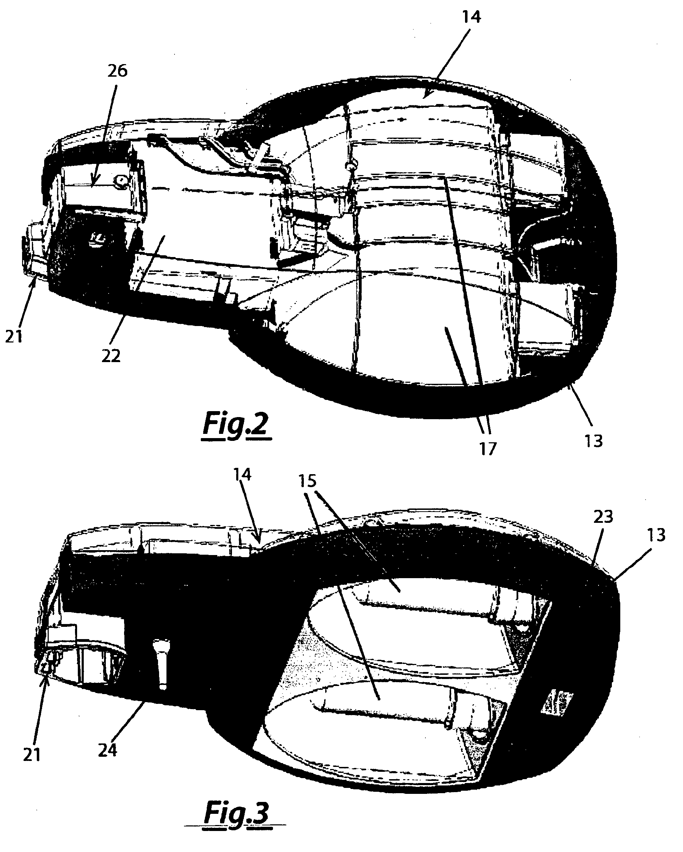

- figure 2 is a top perspective view of the road projector of figure 1, using high pressure discharge lamps as lighting source, according to the present invention;
- figure 3 is a bottom perspective view of the road projector of figure 1, according to the present invention;

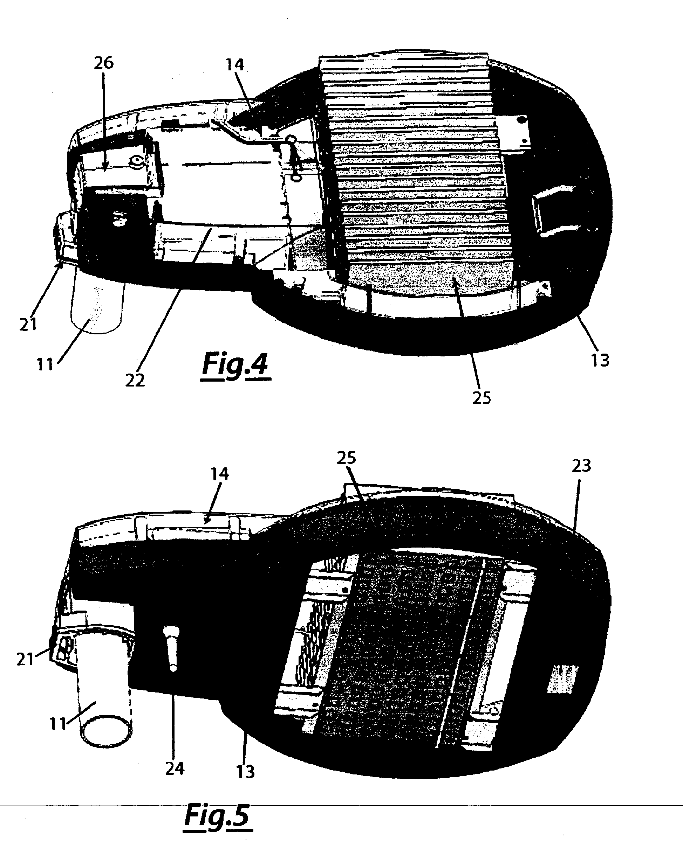

- figure 4 is a top perspective view of a second embodiment, using LED as light source, of a road projector used in the energy saving road lighting device with telephone helpline functions, according to the present invention;
- figure 5 is a bottom perspective view of the road projector of figure 4, according to the present invention;
- figure 6 is a partial perspective view of a pole or street lamp for road lighting, complete with solar photovoltaic module, used in the energy saving road lighting device with telephone helpline functions, according to the present invention;
- figure 7 is a schematic partial plan view of a possible arrangement of poles or street lamps for road lighting used in the energy saving road lighting device with telephone helpline functions, according to the present invention;
- figure 8 is a front view of a possible arrangement of poles or street lamps for road lighting used in the energy saving road lighting device with telephone helpline functions, according to the present invention;
- figure 9 is a perspective view of a possible arrangement of poles or street lamps for road lighting used in the energy saving road lighting device with telephone helpline functions, according to the present invention.

With reference to the figures mentioned, the energy saving road lighting device with telephone helpline functions, according to the present invention, includes a series of road projectors 10, mounted on respective poles 11 for road lighting (street lamps).

Each pole or street lamp 11 is provided with a photovoltaic generator, consisting of an 150-180 W photovoltaic module 12 and an inverter, which is integrated into the power supply of the lighting source of the projector 10, while each road projector 10 includes a radio transceiver, preferably of the "spread spectrum radio" type, and a controller, integrated into the power supply of the lighting source of the projector 10, able to balance the energy produced by the photovoltaic generator with the energy absorbed by the lighting source.

The projector 10 mainly includes an envelope or shaped case 13 made of aluminium pressure die-casting, a cover cap 14 with hook 26 for the connection with the pole 11, one or more light sources (consisting of a matrix of LED 25 or one or two high pressure gas discharge lamps 15 (one reserve of the other), in the latter case provided with relative lamp holders 16, supports 19, 20, reflecting screens 17 and anti-glare base glass 18), a support bracket 21, a power supply 22 with inverter and integrated radio transceiver with its antenna 24 and at least one sensor 23 of the movement of people and/or things in the lightened area.

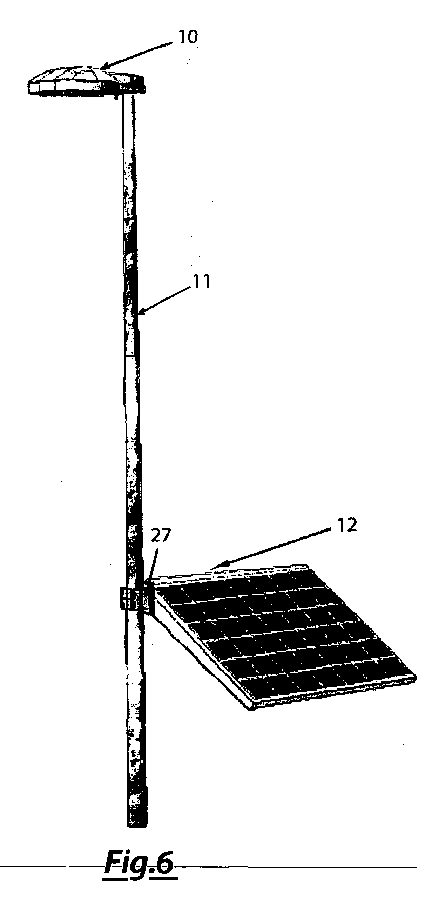

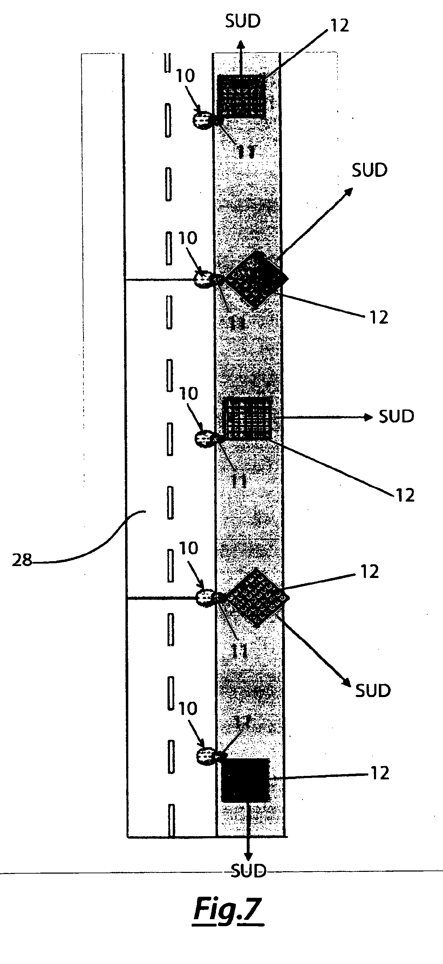

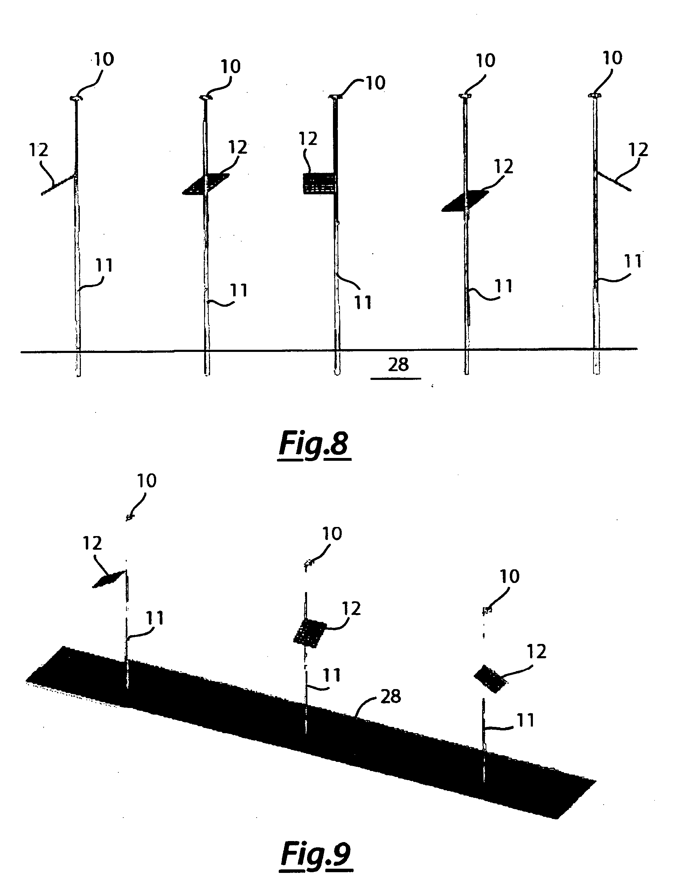

As illustrated in detail in the figures 6, 7, 8 and 9 attached, as said, a photovoltaic module 12, mounted on the same pole or street lamp 11, is associated with each road projector 10 and electrically connected with the power supply 22 with inverter contained in the projector 10.

In particular, it is possible to replace in the head of the pole 11 the existing road projector with the projector 10 containing the power supply 22 for operating the light source and inverter for the photovoltaic module 12; the module 12 consists of a single solar panel of about 150-180 W at a height of 5-6 metres from the ground, is sloped at 30° and is mounted by means of a fixed bracket 27, which is South oriented in order to maximize energy production and avoid shadings due to the pole 11 itself.

Moreover, this mode of installation, which assumes that the direction of the South is within the zone outside the track or roadway 28, allows, in this way, not to clog up the roadway 28 and not interfere with the lighting flow of each street lamp 11.

The inverter converts the electricity of the solar panels 12 and conveys the energy into the same power system which supplies the projector 10 of the street lamp or pole 11; when the street lamp 11 is switched on, the solar inverter is off, so that both functionalities are alternatively active.

In such a way, the interface of a photovoltaic production system with the power system, according to the regulations in force, and control of the street lamps 11 are obtained.

By mounting in this way the photovoltaic module 12 on the pole 11 (it is minded that it is always possible to find the optimum orientation of the module 12 towards the South) there are no shadows projected by the pole 11 on the module 12 during the day, although the pole 11 is higher than the module 12, because the pole 11 is always at North of the module 12; in addition, the module 12 does not shield in any way the light emitted by the projector 10 of the street lamp 11 since the photovoltaic module 12 is always in the rear half-space of the street lamp 11.

Finally, the overall dimensions of the photovoltaic module 12 (which are around 1 meter x 1 meter) are the best, since they allow its application to the majority of the pre-existing road poles 11, without needing to use mechanical reinforcements of the poles themselves or consolidate the foundation plinths; with these dimensions, indeed, the application of additional stresses to the structure (caused, for example, by snow and/or wind) does not exceed, in most cases, the structural limits of the pole-foundation assembly.

As already said, each road projector 10 incorporates inside and especially within the power supply 22 of the light sources, a motion sensor 23 of persons or things present on the roadway 28.

Such a sensor 23 is for instance of low power Doppler effect radar type and allows to control the entire area lightened by the projector 10.

In order to achieve the maximum possible saving of energy absorbed by the street lamp 11 to illuminate the road, the aforesaid sensor 23, moment by moment, detects the movement presence in its area in order to illuminate only when necessary.

In absence of movement, the area is lightened with a minimum lighting intensity, while the intensity is increased to the maximum levels in presence of movement.

The operation depends on the type of light source present in the projector 10.

In case of matrix of LED 25, whose intensity can be modulated in real time with high speed of change, the strategy consists of a rapid increase and decrease of the lighting intensity depending on the presence of movement.

In case of gas discharge lamps 15, whose brilliancy variation has a very slow temporal dynamics (tens of seconds), the lighting intensity is adjusted depending on the "average movement" of people or things, in the sense that the motion sensor 23 analyzes the movement over several minutes and processes a strategy of brilliancy depending on the average amount of movement in the time frame considered.

The regulations about road lighting require that a lighting which allows to a motorist, during his transit, to perceive a constant luminance, having a specified minimum intensity, with defined requirements of uniformity and dazzling, is guaranteed; these features are ensured by a set of road projectors arranged according to a well precise system geometry. It is clear that the compliance of the lighting parameters required by the regulations is guaranteed, for each elementary section into which the length of a road can be divided, by a subset of projectors composing it; indeed, the road projectors are built in such a way that the lighting effect of each also extends to the area lightened by the 2-3 adjacent, previous and following, projectors.

It is clear, then, that any strategy for adjusting the light which satisfies the regulatory requirements in every condition of use of the road must consider this aspect.

The device according to the invention makes use of the radio communication which connects each street lamp 11 with those ones adjacent in order to implement the adjustment strategy.

In particular, detected movements lacking, the device sets itself in a state of minimum brilliancy, except for the street lamps or poles 11 positioned at the beginning and end of the street, which are maintained at a higher brilliancy.

As soon as the first street lamp 11 of the road detects a movement, a radio message is sent to the following street lamps 11, which, preceding the transit of the vehicle, increase the brilliancy to values necessary to ensure the prescribing requirements of lighting.

As the vehicle proceeds, an increasing number of street lamps 11, which anticipate the switching on with respect to the position of the vehicle, increase their brilliancy, so as to create such a wave of light which precedes the movement of the vehicle.

When the vehicle is passed, always thanks to the radio messaging which the street lamps 11 mutually exchange through the antenna 24, detected movement lacking, the street lamps 11 which do not more contribute to the lighting of the road portion engaged by the vehicle reduce again the brilliancy, going back to the rest position.

Thus, for example in outside the town little patronized roads, it is possible to achieve very high electricity saving.

It is obvious that this mode of operation is possible only with street lamps of matrix of LED 25, while, in case of discharge lamps 15, the brilliancy can only be adjusted on long terms based on the average traffic intensity, but, in this case, the guaranteed minimum brilliancy might be much higher and never lower than 50% of the maximum one (also because the brilliancy of the high pressure gas discharge lamps 15 cannot be adjusted at lower levels).

At the contrary, with the matrix of LED 25 it is possible to reduce the brilliancy to minimum levels, even lower than 10% of the maximum lighting flow, thanks to the possibility of adjusting the brilliancy in real time ("real time dimmering") and the adjustment flexibility of this type of source (continuously adjustable from 0 to 100%).

The integration in the power supply 22 of the light sources of the projector 10 of a photovoltaic inverter allows, then, to supply by day the photovoltaic energy into the same power system which supplies the projector 10 by night.

A purpose achieved by the device according to the invention in fact, is to provide a zero sum energy balance between the electricity absorbed by each projector 10 and the electricity produced by the respective photovoltaic generator during a calendar year.

In particular, in case of projector 10 with matrix of LED 25, an energy saving strategy consists in maximizing the light emitted by the projectors 10 of each road depending on the available energy balance, in order to ensure the night light maximum compatible with the energy balance.

Thanks to the radio communication and the control algorithms contained in the power supply 22, complete with inverter (which of course also incorporates the gauges of absorbed energy and produced energy), it is possible to achieve this balance and therefore always provide the best light, at zero energy cost.

It is obvious that the system ensures compliance with regulatory safety requirements of road traffic, because the energy measuring of the photovoltaic panel 12 and inverter assures on average compliance of the various conditions.

Indeed, for example, an 150 W photovoltaic module 12 provides on average 165 kWh/year in the North of Italy, while an 100 W road projector 10 of matrix of LED 25, powered on average for 8.5 hours per day for 365 days per year, absorbs, at full power, around 310 kWh. Therefore, it suffices a saving over 47% of energy of the projector 10 to achieve a balance and this purpose can be statistically achieved without difficulty through the device made according to the invention in low traffic roads.

Finally, people passing in the road lightened by the projectors 10 may be equipped with a radio remote control, provided with a spread spectrum communication, in order to transmit radio messages towards the projectors 10.

Indeed, when a user who is on the road presses a button of such a remote control, a radio message is received, through the antenna 24, from the closest projector 10, which, instantaneously, increases its brilliancy in order to, for example, discourage an aggressor or for further functional user's requirements (for example, if the user is still at the roadside with a mechanical damage to the vehicle he was driving).

In particular, the radio remote control can be equipped with two buttons: a button for help request and another button for control the brilliancy of the projectors 10 of the street lamps 11.

In case of pressure of the help request button, the radio message is received by the closest projector 10 which immediately increases the brilliancy and starts a flashing (considering a matrix of LED 25 projector 10) or switches on the second reserve gas discharge lamp 15 (considering a gas discharge lamps 15 projector 10).

In both cases the purpose is to discourage a possible aggressor and remotely identify where the user needing help is.

Within a prefixed time interval (for example ten seconds), the user must confirm the alarm by pressing again the help request button.

In such a case, the alarm message automatically moves from one projector 10 to another, until a monitoring and management unit of the lighting plant; then such an unit, equipped with GSM/GPRS/UMTS modem, sends an SMS or an alarm call to the service centre with which is connected, where an operator is able to alert the police or help teams.

In case the control button for brilliancy is pressed, the effect is an increase of the brilliancy of the street lamps 11 affecting the road section where the user is.

The control can be by time (in case of single pressure of the button), in which case the projectors 10 increase the brilliancy until the maximum value and keep themselves in this state for a prefixed time (for example fifteen minutes), or the control can be kept throughout the night and cease the following day (in case of pressure of the button of the remote control for three consecutive times within five seconds).

This last mode can be useful in case of a night event (for instance a fair or little market), for which it is desired to increase the brilliancy of the road to the highest possible value.

The technical features of the energy saving road lighting device with telephone helpline functions, which is the object of the present invention, and the resulting benefits too, are clear from the description made.

In particular, they are represented by the following aspects:
- simplified installation of the photovoltaic module on the pole of each street projector;
- possibility of replacing the armature at the head of the pole for installing the projector;
- reuse of the same pre-existing electrical wiring;
- control and supervision with the only integration of the control unit of the road lighting plant;
- possibility of installing the solar panel without clogging up the roadway and/or interfering with the lighting flow of the lamp;
- optimal orientation and sizing of the photovoltaic module, which can be easily applied to existing poles;
- significant energy saving through movement detector;
- possibility of implementing telephone helpline functions.

## Claims

1. Energy saving road lighting device with telephone helpline functions, comprising at least one projector (10), which uses LED (25) lights or high pressure gas discharge lamps (15) and one or more solar photovoltaic modules or panels (12) connected with respective photovoltaic generators, each projector (10) and each photovoltaic module (12) being mounted on a respective pole or street lamp (11) used for the road public lighting, wherein each projector (10) includes at least one radio transceiver, at least one controller and at least one inverter, said controller and said inverter being integrated within a power supply (22) of said light sources and being suitable to balance the energy produced by each photovoltaic generator with the energy consumed by said light sources, **characterized in that** said photovoltaic module (12) is installed on the pole or street lamp (11) below said projector (10) and at a certain height from the ground, is sloped of about 30° and is mounted through a bracket (27) oriented towards the south, in order to maximize energy production, avoid shading of the pole or street lamp (11) and said photovoltaic module (12) is installed at the back of the projector (10) and from the opposite side with respect to the road (28).

2. Energy saving road lighting device as claim 1, **characterized in that** at least one motion sensor (23) is inserted into each pole or street lamp (11) or projector (10), in order to detect the movement of people or objects on the road (28) illuminated by said projectors (10).

3. Energy saving road lighting device as claim 1, **characterized in that** said light sources include a LED (25) array or one or more high pressure gas discharge lamps (15), provided with respective lamp holders (16), reflective displays (17) and antireflection glass (18).

4. Energy saving road lighting device as claim 2, **characterized in that** said motion sensor (23) controls said projector (10) so as to illuminate the road (28) with a minimum light intensity in movement absence and with a maximum intensity in movement presence.

5. Energy saving road lighting device as claim 4, **characterized in that**, in case the light sources consist of a LED (25) array, said light intensity is modulated by an increase and a rapid decrease of the light intensity, depending on the presence of movement on the road (28).

6. Energy saving road lighting device as claim 4, **characterized in that**, in case the light sources consist of discharge lamps (15), the luminous intensity is adjusted according to an average amount of movement of persons or objects on the road (28) in a prefixed time.

7. Energy saving road lighting device as claim 4, **characterized in that** street lamps or poles (11) arranged at the beginning and the end of the road (28) are kept at a light intensity greater than that one of the other poles or street lamps (11).

8. Energy saving road lighting device as claim 4, **characterized in that** when said motion sensor (23) of a projector (10) detects a movement, the radio transceiver of said projector (10) sends a radio message to the projectors (10) of the subsequent poles or street lamps (11), which increases the brightness to values necessary to assure the rule lighting requirements, in order to create a light wave which precedes the movement.

9. Energy saving road lighting device as claim 4, **characterized in that**, in absence of detected movement, the poles or street lamps (11) which do not contribute to the lighting of the portion of road (28) where the movement is detected reduce the brightness, till to assume a rest state.

10. Energy saving road lighting device as claim 4, **characterized in that** the customers passing on the road (28) illuminated by said projectors (10) are equipped with a radio remote control, suitable to transmit radio messages towards said projectors (10), which increase their brightness in order to deter an aggressor and/or for other functional user's requirements, such as mechanical vehicle failure.

11. Energy saving road lighting device as claim 10, **characterized in that** said radio remote control includes a help request button and a brightness control button of said projectors (10), said help request being suitable to be confirmed by pressing again said help request button within a prefixed time interval.

12. Energy saving road lighting device as claim 11, **characterized in that** said help request automatically transfers from a projector (10) to another, up to a supervision and management unit of the lighting plant, said unit being suitable to send messages and/or alarm telephone calls to a services centre with which is connected and where an operator is suitable to alert the police or rescue teams.

13. Energy saving road lighting device as claim 1, **characterized in that** said light sources can be timely activated, so that the projectors (10) increase the brightness up to a maximum value and remain in this state for a predetermined time, or so that the projectors (10) remain active o inactive for set times.

## Patentansprüche

1. Energiesparende Straßenbeleuchtungsvorrichtung mit Telefonhilfsleitungsfunktionen, umfassend zumindest einen Projektor (10), der LED (25)-Leuchten oder Hochdruckgasentladungslampen (15) und eine oder mehrere Solar-Fotovoltaik-Module oder -paneele (12), die mit entsprechenden fotovoltaischen Generatoren verbunden sind, verwendet, wobei jeder Projektor (10) und jedes fotovoltaische Modul (12) an einem entsprechenden Mast oder einer Straßenlampe (11), die für die öffentliche Straßenbeleuchtung verwendet werden, befestigt sind, wobei jeder Projektor (10) zumindest einen Funk-Sendeempfänger, zumindest eine Steuereinheit und zumindest einen Wechselrichter enthält, wobei die Steuereinheit und der Wechselrichter innerhalb einer Stromversorgung (22) der Lichtquellen integriert sind und geeignet ausgebildet sind, um die von jedem fotovoltaischen Generator erzeugte Energie mit der von den Lichtquellen verbrauchten Energie abzugleichen, **dadurch gekennzeichnet, dass** das fotovoltaische Modul (12) auf dem Mast oder der Straßenlampe (11) unterhalb des Projektors (10) und auf einer bestimmten Höhe zum Boden angebracht ist, dass es um ungefähr 30° geneigt ist und mittels einer Halterung (27) nach Süden ausgerichtet befestigt ist, um die Energieproduktion zu maximieren und ein Schattenwerfen des Mastes oder der Straßenlampe (11) zu vermeiden, und wobei das fotovoltaische Modul (12) an der Rückseite des Projektors (10) und auf der bezüglich der Straße (28) gegenüberliegenden Seite angebracht ist.

2. Energiesparende Straßenbeleuchtungsvorrichtung nach Anspruch 1, **dadurch gekennzeichnet, dass** zumindest ein Bewegungssensor (23) in jeden Mast oder Straßenlampe (11) oder Projektor (10) eingefügt ist, um die Bewegung von Personen oder Objekten auf der von den Projektoren (10) erleuchteten Straße (28) zu erfassen.

3. Energiesparende Straßenbeleuchtungsvorrichtung nach Anspruch 1, **dadurch gekennzeichnet, dass** die Lichtquellen eine LED (25)-Anordnung oder eine oder mehrere Hochdruckgasentladungslampen (15) enthalten, die mit entsprechenden Lampenhaltern (16), reflektierenden Anzeigen (17) und Antireflektionsglas (18) ausgestattet sind.

4. Energiesparende Straßenbeleuchtungsvorrichtung nach Anspruch 2, **dadurch gekennzeichnet, dass** der Bewegungssensor (23) den Projektor (10) steuert, um die Straße (28) mit einer minimalen Lichtintensität bei Fehlen von Bewegung und mit einer maximalen Intensität bei Vorhandensein von Bewegung zu beleuchten.

5. Energiesparende Straßenbeleuchtungsvorrichtung nach Anspruch 4, **dadurch gekennzeichnet, dass** im Falle, dass die Lichtquellen aus einer LED (25)-Anordnung bestehen, die Lichtintensität, abhängig von dem Vorhandensein von Bewegung auf der Straße (28), durch einen Anstieg und einen schnellen Abfall der Lichtintensität moduliert wird.

6. Energiesparende Straßenbeleuchtungsvorrichtung nach Anspruch 4, **dadurch gekennzeichnet, dass** im Falle, dass die Lichtquellen aus Entladungslampen (15) bestehen, die Leuchtintensität gemäß einem mittleren Betrag der Bewegung von Personen oder Objekten auf der Straße während einer vorab festgelegten Zeit angepasst wird.

7. Energiesparende Straßenbeleuchtungsvorrichtung nach Anspruch 4, **dadurch gekennzeichnet, dass** Straßenlampen oder Masten (11), die am Anfang und am Ende der Straße (28) angeordnet sind, auf einer höheren Lichtintensität gehalten werden als die der anderen Masten oder Straßenlampen (11).

8. Energiesparende Straßenbeleuchtungsvorrichtung nach Anspruch 4, **dadurch gekennzeichnet, dass** wenn der Bewegungssensor (23) des Projektors (10) eine Bewegung erkennt, der Funk-Sendeempfänger des Projektors (10) eine Funknachricht an die Projektoren (10) der nachfolgenden Masten oder Straßenlampen (11) schickt, die die Helligkeit auf Werte, die notwendig sind, um die vorgeschriebenen Beleuchtungsanforderungen zu erfüllen, erhöht, um eine Lichtwelle zu erzeugen, die der Bewegung vorausgeht.

9. Energiesparende Straßenbeleuchtungsvorrichtung nach Anspruch 4, **dadurch gekennzeichnet, dass** in Abwesenheit einer erfassten Bewegung die Masten oder Straßenlampen (11), die nicht zu der Beleuchtung des Straßenabschnitts, wo die Bewegung erfasst worden ist, beitragen, die Helligkeit reduzieren, bis zur Einnahme eines Ruhezustands.

10. Energiesparende Straßenbeleuchtungsvorrichtung nach Anspruch 4, **dadurch gekennzeichnet, dass** die Verbraucher, die sich auf der Straße (28), die von den Projektoren (10) erleuchtet ist, entlang bewegen, mit einer Funkfernbedienung ausgestattet sind, die geeignet ist, um Funknachrichten an diese Projektoren (10) zu übertragen, die deren Helligkeit erhöhen, um einen Angreifer abzuschrecken und/oder für andere funktionale Nutzeranforderungen, wie beispielsweise eine mechanische Fahrzeugpanne.

11. Energiesparende Straßenbeleuchtungsvorrichtung nach Anspruch 10, **dadurch gekennzeichnet, dass** die Funkfernbedienung eine Hilfeanforderungstaste und eine Helligkeitssteuerungstaste der Projektoren (10) beinhaltet, wobei die Hilfeanforderung in geeigneter Weise durch wiederholtes Drücken der Hilfeanforderungstaste innerhalb eines vorbestimmten Zeitintervalls bestätigt werden muss.

12. Energiesparende Straßenbeleuchtungsvorrichtung nach Anspruch 11, **dadurch gekennzeichnet, dass** die Hilfeanforderung automatisch von einem Projektor (10) zum anderen übertragen wird bis zu einer Überwachungs- und Managementeinheit des Leuchtenwerks, wobei die Einheit in der Lage ist, Nachrichten und/oder Alarmtelefonanrufe an Servicezentren, mit denen sie verbunden ist, zu schicken, und wo eine Bedienperson in der Lage ist, die Polizei oder Rettungsteams zu alarmieren.

13. Energiesparende Straßenbeleuchtungsvorrichtung nach Anspruch 1, **dadurch gekennzeichnet, dass** die Leuchtquellen rechtzeitig aktiviert werden können, so dass die Projektoren (10) die Helligkeit bis zu einem Maximalwert erhöhen und in diesem Zustand für eine vorbestimmte Zeit verbleiben, oder so dass die Projektoren (10) für eingestellte Zeiten aktiv oder inaktiv bleiben können.

## Revendications

1. Dispositif d'éclairage routier à économie d'énergie ayant des fonctions d'assistance téléphonique, comprenant au moins un projecteur (10), qui utilise des éclairages à LED (25) ou des lampes à décharge de gaz à haute pression (15) et un ou plusieurs modules ou panneaux solaires photovoltaïques (12) connectés à des générateurs photovoltaïques respectifs, chaque projecteur (10) et chaque module photovoltaïque (12) étant monté sur un poteau ou un réverbère (11) respectif utilisé pour l'éclairage public routier, dans lequel chaque projecteur (10) comprend au moins un émetteur-récepteur radio, au moins un contrôleur et au moins un inverseur, ledit contrôleur et ledit inverseur étant intégrés dans une alimentation électrique (22) desdites sources lumineuses et pouvant équilibrer l'énergie produite par chaque générateur photovoltaïque avec l'énergie consommée par lesdites sources lumineuses, **caractérisé en ce que** ledit module photovoltaïque (12) est installé sur le poteau ou le réverbère (11) en dessous dudit projecteur (10) et à une certaine hauteur par rapport au sol, est incliné d'environ 30° et est monté par l'intermédiaire d'une patte (27) orientée vers le sud, afin de maximiser la production d'énergie, en évitant l'ombre du poteau ou du réverbère (11), et ledit module photovoltaïque (12) est installé à l'arrière du projecteur (10) et du côté opposé par rapport à la route (28).

2. Dispositif d'éclairage routier à économie d'énergie selon la revendication 1, **caractérisé en ce qu'**au moins un capteur de mouvement (23) est inséré dans chaque poteau ou réverbère (11) ou projecteur (10), afin de détecter le mouvement de personnes ou d'objets sur la route (28) éclairée par lesdits projecteurs (10).

3. Dispositif d'éclairage routier à économie d'énergie selon la revendication 1, **caractérisé en ce que** lesdites sources lumineuses comprennent un ensemble de LED (25) ou une ou plusieurs lampes à décharge de gaz à haute pression (15), pourvues de supports de lampes (16), d'écrans réfléchissants (17) et de vitres antireflets (18) respectifs.

4. Dispositif d'éclairage routier à économie d'énergie selon la revendication 2, **caractérisé en ce que** ledit capteur de mouvement (23) commande ledit projecteur (10) de façon à éclairer la route (28) avec une intensité lumineuse minimale en absence de mouvement et avec une intensité maximale en présence de mouvement.

5. Dispositif d'éclairage routier à économie d'énergie selon la revendication 4, **caractérisé en ce que**, dans le cas où les sources lumineuses sont constituées d'un ensemble de LED (25), ladite intensité lumineuse est modulée par une augmentation et une diminution rapide de l'intensité lumineuse, en fonction de la présence de mouvement sur la route (28).

6. Dispositif d'éclairage routier à économie d'énergie selon la revendication 4, **caractérisé en ce que**, dans le cas où les sources lumineuses sont constituées de lampes à décharge (15), l'intensité lumineuse est ajustée en fonction d'une quantité moyenne de mouvement de personnes ou d'objets sur la route (28) pendant un temps préfixé.

7. Dispositif d'éclairage routier à économie d'énergie selon la revendication 4, **caractérisé en ce que** les réverbères ou poteaux (11) disposés au début et à la fin de la route (28) sont maintenus à une intensité lumineuse supérieure à celle des autres poteaux ou réverbères (11).

8. Dispositif d'éclairage routier à économie d'énergie selon la revendication 4, **caractérisé en ce que**, lorsque ledit capteur de mouvement (23) d'un projecteur (10) détecte un mouvement, l'émetteur-récepteur radio dudit projecteur (10) envoie un message radio aux projecteurs (10) des poteaux ou réverbères (11) suivants, ce qui augmente la luminosité à des valeurs nécessaires pour assurer les respect des réglementations en matière d'éclairage, afin de créer une onde lumineuse qui précède le mouvement.

9. Dispositif d'éclairage routier à économie d'énergie selon la revendication 4, **caractérisé en ce que**, en l'absence de mouvement détecté, les poteaux ou réverbères (11) qui ne contribuent pas à l'éclairage de la portion de route (28) où le mouvement a été détecté réduisent leur luminosité, jusqu'à adopter un état de repos.

10. Dispositif d'éclairage routier à économie d'énergie selon la revendication 4, **caractérisé en ce que** les usagers passant sur la route (28) éclairée par lesdits projecteurs (10) sont équipés d'une télécommande radio, appropriée pour transmettre des messages radio vers lesdits projecteurs (10), ce qui augmente leur luminosité afin de dissuader un agresseur et/ou pour d'autres besoins fonctionnels des usagers, tels qu'une panne mécanique d'un véhicule.

11. Dispositif d'éclairage routier à économie d'énergie selon la revendication 10, **caractérisé en ce que** ladite télécommande radio comprend un bouton de demande d'aide et un bouton de commande de luminosité desdits projecteurs (10), ladite demande d'aide pouvant être confirmée par une nouvelle pression sur ledit bouton de demande d'aide dans un intervalle de temps préfixé.

12. Dispositif d'éclairage routier à économie d'énergie selon la revendication 11, **caractérisé en ce que** ladite demande d'aide se transfère automatiquement d'un projecteur (10) à un autre, jusqu'à une unité de supervision et de gestion de l'installation d'éclairage, ladite unité pouvant envoyer des messages et/ou des appels téléphoniques d'alarme à un centre de services auquel elle est connectée et au sein duquel un opérateur peut alerter la police ou des équipes de secours.

13. Dispositif d'éclairage routier à économie d'énergie selon la revendication 1, **caractérisé en ce que** lesdites sources lumineuses peuvent être activées en temps utile, de telle sorte que les projecteurs (10) augmentent la luminosité à une valeur maximale et restent dans cet état pendant une durée prédéterminée, ou de telle sorte que les projecteurs (10) restent actifs ou inactifs pendant des durées définies.
